# EUROPÄISCHE PATENTSCHRIFT

(11) **EP 1 732 421 B1**
(45) Veröffentlichungstag und Bekanntmachung des Hinweises auf die Patenterteilung: **03.03.2010**
(21) Anmeldenummer: 05777740.1
(22) Anmeldetag: 31.03.2005
(51) Int. Cl.: A47J 19/02

(54) **SIEBKORB FÜR EINE HAUSHALTS-SAFTZENTRIFUGE**
STRAINER BASKET FOR A HOUSEHOLD JUICE CENTRIFUGE
PANIER PERFORE D'UNE CENTRIFUGEUSE A JUS DOMESTIQUE

(30) Priorität: 31.03.2004 DE 102004015918
(43) Veröffentlichungstag der Anmeldung: 20.12.2006
(73) Patentinhaber: BSH Bosch und Siemens Hausgeräte GmbH, 81739 München (DE)
(72) Erfinder: MAZEJ, Stanislav, 3303 Gomilsko (SI); ZIBRET, Igor, 3327 Smartno ob Paki (SI); OGRIZEK, Darko, 3320 Velenje (SI); SEDOVSEK, Aleksander, 3330 Mozirje (SI); SEMEJA, Uros, 3327 Smartno ob Paki (SI); PECNIK, Bostjan, 3327 Smartno ob Paki (SI)
(86) Internationale Anmeldenummer: PCT/EP2005/051461
(87) Internationale Veröffentlichungsnummer: WO 2005/110173

(56) Entgegenhaltungen:
- DE-B- 1 061 982
- US-A- 1 569 778
- US-A- 2 971 649
- US-A- 3 980 563
- US-A- 4 345 517

## Beschreibung

Die Erfindung betrifft einen Siebkorb für eine Haushalts-Saftzentrifuge, der einen mit einer Reibscheibe ausgestatteten Boden aufweist, an den sich ein mit Durchtritten versehenes, zumindest über einen Teil ihrer Höhe sich konisch erweiterndes Sieb anschließt, das eine erste und eine zweite Siebstufe mit übereinander angeordneten Umfangswänden unterschiedlicher Steigungswinkel aufweist. Die Erfindung betrifft auch eine Haushalts-Saftzentrifuge mit einem solchen Siebkorb.

Aus GB 538 566 ist ein gattungsgemäßer Siebkorb bekannt.

Auch die deutsche Patentschrift DE 1 061 982 offenbart einen Siebkorb gemäß Oberbegriff des Anspruchs 1.

Der bekannte Siebkorb weist insgesamt drei Siebstufen mit sich konisch vom Boden weg erweiternden Siebflächen auf, wobei vom Boden aus gesehen die erste Siebstufe einen Steigungswinkel von ca. 30°, die darüber angeordnete zweite Siebstufe einen Steigungswinkel von ca. 65° und die abschließende Siebstufe einen Steigungswinkel von ca. 55° aufweist. Außerdem ist eine Prallfläche vorgesehen, die sicherstellen soll, dass zumindest ein Teil des Reibguts senkrecht auf die Siebfläche der ersten Siebstufe aufprallt. Sowohl die erste als auch die zweite Siebstufe weist eine sich konisch vom Boden weg erweiternde Umfangswand auf. So kann auch die obere Umfangswand d.h. die zweite Siebstufe zum vertikalen Abtropfen von Saft herangezogen werden, was bei einer senkrecht stehenden Umfangswand nicht möglich wäre. Die zwischen dem Boden und der zweiten Siebstufe angeordnete erste Siebstufe weist einen geringeren Steigungswinkel als die zweite Siebstufe auf. So wird die Abtropfzeit für den Saft verlängert, was zu einer erhöhten Ausbeute an Saft führt. Gleichzeitig werden die innerhalb des Siebkorbes befindlichen Tresteranteile länger innerhalb des Siebkorbes gehalten, wodurch die Saftausbeute zusätzlich erhöht wird.

Aufgabe der Erfindung ist es, einen gattungsgemäßen Siebkorb zur Erzielung einer erhöhten Saftausbeute zu verbessern.

Erfindungsgemäß wird diese Aufgabe durch einen Siebkorb gemäß Anspruch 1 gelöst, demnach es für die Saftausbeute von Vorteil ist, wenn die erste Siebstufe einen Steigungswinkel zwischen 45° und 54,9° aufweist.

Als optimal hat es sich herausgestellt, wenn die erste Siebstufe einen Steigungswinkel zwischen 50,5° und 53,5°, vorzugsweise von genau 52,5° aufweist.

Bei der zweiten Siebstufe ist es von Vorteil, wenn diese einen Steigungswinkel zwischen 55° und 65° aufweist.

Als optimal hat es sich herausgestellt, wenn die zweite Siebstufe einen Steigungswinkel zwischen 55,5° und 58,5°, vorzugsweise von genau 57° aufweist.

In einer Variante der Erfindung kann die zweite Siebstufe lösbar an der ersten Siebstufe befestigt sein.

In einer bevorzugten Ausgestaltung ist aus Kostengründen vorzuziehen, wenn die zweite Siebstufe einteilig mit der ersten Siebstufe verbunden ist.

Für eine einfache Herstellung des erfindungsgemäßen Siebkorbes ist es von Vorteil, wenn jede Siebstufe mindestens eine kunststoffumspritzte, metallische Siebfläche aufweist.

Die Siebflächen kann beispielsweise aus perforiertem Edelstahl-Streckmetall hergestellt stein.

Zur Erhöhung der Steifigkeit für den Siebkorb kann jede Siebstufe eine Anzahl von Siebflächen tragen, die über Versteifungsstege miteinander verbunden sind.

Die Versteifungsstege der ersten Siebstufe und die Versteifungsstege der zweiten Siebstufe sollten vorzugsweise zur Drehachse des Siebkorbes versetzt zueinander angeordnet sein.

Der erfindungsgemäße Siebkorb ist für Haushalts-Saftzentrifugen vorgesehen.

Ein bevorzugtes Ausführungsbeispiel der Erfindung ist anhand der Figuren 1 bis 3 im folgenden näher erläutert.

Es zeigen:

Figur 1 eine perspektivische Ansicht einer Saftzentrifuge, die einen erfindungs gemäßen Siebkorb aufweist;

Figur 2 eine Schnittansicht der Saftzentrifuge aus Figur 1 mit einem Arbeitsraum zur Aufnahme des erfindungsgemäßen Siebkorbes;

Figur 3 eine perspektivische Ansicht eines erfmdungsgemäßen Siebkorbes.

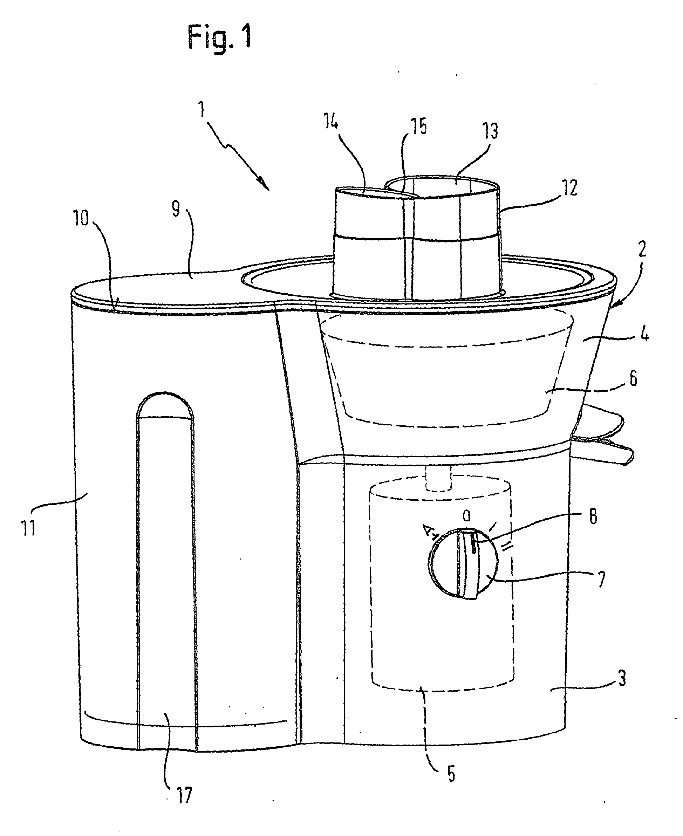

Eine in Figur 1 dargestellte Saftzentrifuge 1 weist ein Gehäuse 2 auf, das ein im wesentlichen hohlzylindrisches Unterteil 3 und ein konisch geformtes Oberteil 4 umfasst. Nur verdeckt schematisch sind ein im Unterteil 3 angeordneter Antriebsmotor 5 für ein im Oberteil 4 drehbar gelagertes Arbeitswerkzeug 6 gezeigt. Der elektrisch betreibbare Antriebsmotor 5 ist über ein drehbares Betätigungselement 7 steuerbar. Das Betätigungselement 7 ist als Drehknebel ausgebildet und an einer vorderen Seitenwand des hohlzylindrischen Unterteils 3 angebracht. In der dargestellten Drehposition des Betätigungselements 7 zeigt eine Strichmarkierung 8 die Schalterstellung "0" an, in der das Haushaltsgerät außer Betrieb gesetzt ist. In einer im Uhrzeigersinn weiter rechts gelegenen Schalterstellung "I" des Betätigungselements 7 ist die Saftzentrifuge 1 mit einer niedrigen Drehzahl angetrieben und in einer noch weiter rechts gelegenen Schalterstellung "II" des Betätigungselements 7 ist die Saftzentrifuge 1 mit einer hohen Drehzahl angetrieben. In einer im Uhrzeigesinn links von der Schalterstellung "0" gelegenen Schalterstellung "A" befindet sich das Betätigungselement 7 in einer Entriegelungsposition 18, in der ein Gerätedeckel 9 aus seiner Verriegelungsposition lösbar ist, so dass bei abgenommenen Gerätedeckel 9 das Arbeitswerkzeug 6 entnommen werden kann. Der Gerätedeckel 9 liegt auf einer Oberseite des Gehäuses 2 bündig auf und deckt auch eine obere Öffnung 10 eines Tresterbehälters 11 ab. Der Gerätedeckel 9 trägt einen Einfüllschacht 12 über den Nahrungsmittelstücke in das Gehäuse 2 auf das Arbeitswerkzeug 6 aufbringbar sind. Der Einfüllschacht 12 ist zweiteilig ausgebildet, d.h. es sind zwei Einfüllstutzen 13 und 14 vorhanden, die unterschiedliche Öffnungsquerschnitte aufweisen und die durch eine Schachtwand 15 voneinander getrennt sind. Die Einfüllstutzen 13 und 14 haben einen im wesentlichen kreisrunden bis ovalen Querschnitt, wobei der Querschnitt des Einfüllstutzens 13 größer als der Querschnitt des Einfüllstutzens 14 ausgebildet ist Die über den Einfüllstutzen 13 oder 14 eingebrachten Nahrungsmittelstücke werden durch das Arbeitswerkzeug 6 in überwiegend feste Tresteranteile und in Saftanteile getrennt. Die Tresteranteile werden nach der Trennung im Tresterbehälter 11 gesammelt und die Saftanteile in einen Auffangbehälter weitergeleitet. Der Tresterbehälter 11 weist an zwei gegenüberliegenden Behälterwänden muldenartig nach innen zurückspringende, rinnenförmige Griffbereiche 17 auf.

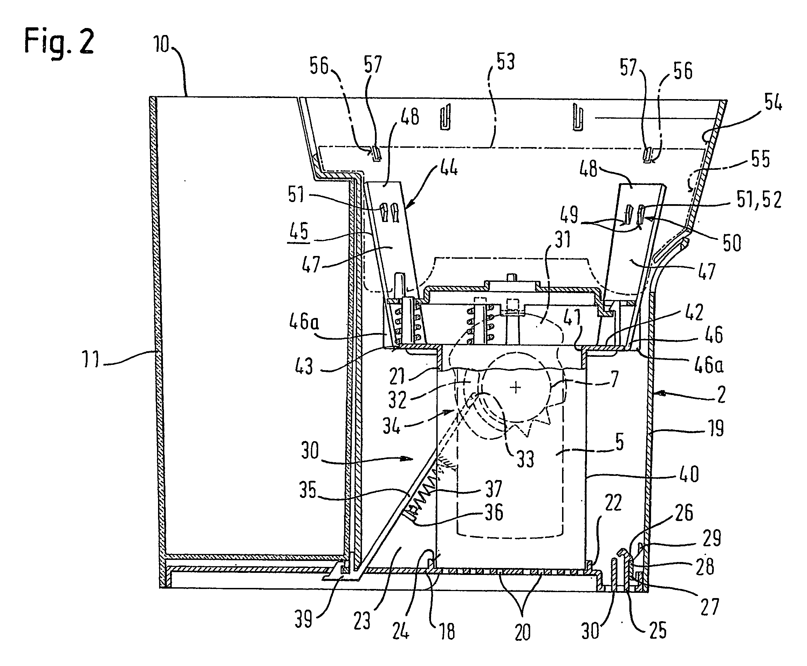

Das in Figur 2 in einer Schnittansicht dargestellte Gehäuse 2 weist ein erstes Gehäuseteil 18 und ein zweites Gehäuseteil 19 auf. Das erste Gehäuseteil 18 bildet einen Boden der Saftzentrifuge 1, der zur Kühlung des Motors 5 mit Luftdurchtritten 20 versehen ist. Der Motor 5 ist in einem Motorträger 21 gehalten, der in einem am ersten Gehäuseteil 18 angeformten Sitz 22 geführt ist. Der Sitz 22 erstreckt sich als ringförmiger Vorsprung von der Innenseite des ersten Gehäuseteils 18 in einen Aufnahmeraum 23 für den Motorträger 21 des Motors 5. Damit der Motorträger 21 selbstzentrieren in den ringförmigen Sitz 22 einsetzbar ist, weist die obere Kante des Sitzes 22 eine Fase auf. Das als Bodenplatte ausgebildete erste Gehäuseteil 18 trägt ein Rastmittel 25. Das Rastmittel 25 ist als eine an dem ersten Gehäuseteil 18 angeformte Lasche ausgebildet, die einen federnden Rasthaken 26 trägt. In seiner verrasteten Position hintergreift der Rasthaken 26 des Rastmittels 25 ein Gegenrastmittel 27 am zweiten Gehäuseteil 19. Das Gegenrastmittel 27 ist als Rastvorsprung 28 ausgebildet. Für eine zusätzliche stabile Verbindung von erstem Gehäuseteil 18 und zweitem Gehäuseteil 19 ist am ersten Gehäuseteil 18 eine Rastausnehmung 29 angeformt in die der Rastvorsprung 28 des zweiten Gehäuseteiles 19 eingreift. Das erste Gehäuseteil 18 und das zweite Gehäuseteil 19 sind an mehreren Stellen über eine Anzahl von Rastmittel 25 und Gegenrastmittel 27 verbunden. Diese Verbindungsstellen sind vorzugsweise zumindest annähernd gleichmäßig über den Umfang des Gehäuses 2 verteilt angeordnet.

Eine zusätzliche Tresterbehälter-Sicherheitseinrichtung 30 weist einen mit dem Betätigungselement 7 verbundenen Kulissenträger 31 auf. Der Kulissenträger 31 ist zusammen mit dem Betätigungselement 7 drehbar am Gehäuseteil 19 gelagert. Der Kulissenträger 31 weist eine Kulisse 32 auf, in der ein als Zapfen 33 ausgebildete Sperrelement 34 eingreift. Das Sperrelement 34 bzw. der Zapfen 33 ist mit einem Schieber 35 verbunden, der verschiebbar im Gehäuse 2 gelagert ist. Der Schieber 35 weist einen Vorsprung 36 auf, an dem ein erstes Ende eines als Federwendel ausgebildetes Spannelement 37 aufsitzt, Ein zweites Ende des Spannelements 37 stützt sich am Gehäuseteil 19 ab.

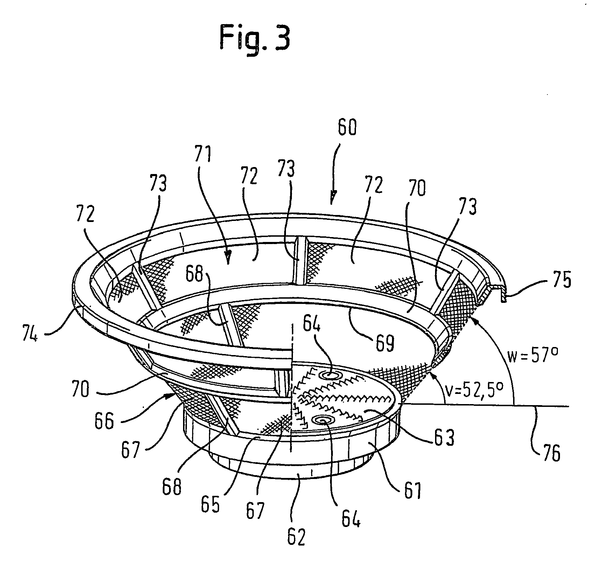

In den Motorträger 21 ist der Motor 5 eingesetzt. Der Motorträger weist einen hohlzylindrischen Topfteil 40 auf. An einen oberen stirnseitigen Ende 41 des Topfteils 40 schließt sich ein ringscheibenförmiger Boden 42 an. An einer äußeren Kante 43 sind vorzugsweise vier gleichmäßig über den Umfang erteilte Tragarme 44 vorgesehen. Die Tragarme 44 sind als Haltelaschen 45 ausgebildet und weisen eine im wesentlichen streifenartige Gestalt auf. Untere zweite Endabschnitte 46 der Tragarme 44 sind starr an dem Boden 42 angeformt. Zur Erhöhung der Steifigkeit sind zwei parallel zueinander angeordnete um einen Eckbereich verlaufende Versteifungsrippen an die Tragarme 44 angeformt. In einem mittleren Bereich weisen die Tragarme 44 elastische, vorzugsweise biegeelastische Tragarmabschnitte 47 auf. An oberen ersten Endabschnitten 48 der Tragarme 44 sind als Rastausnehmungen 49 ausgebildete Rastmittel 50 vorgesehen. Wie in Figur 3 gezeigt, sind zu den Rastausnehmungen 49 der Tragarme 44 zugehörige Gegenrastmittel 51 am Gehäuse 2 vorgesehen, die als in die Rastausnehmungen 49 eingreifende Rastnasen 52 ausgebildet sind. Die Tragarme 44 sind durch die Rastausnehmungen 49 an den Rastnasen 52 in hängender Weise gelagert. Um ein ungewolltes Abspringen der oberen ersten Endabschnitte 48 der Tragarme 44 von den Rastnasen 52 zu verhindern, sind die oberen ersten Endabschnitten 48 durch ein in das Gehäuse 2 von oben eingesetztes Gehäuseteil 53 an den Rastnasen 52 in einer nach außen drückenden Position an einer Innenwand 54 der Seitenwand 19 angedrückt. Für ein zuverlässiges Andrücken der biegeelastischen Tragarme 44 gegen die einer Innenwand 54 der Seitenwand 19 können sowohl die Seitenwand 19 als auch eine Seitenwand 55 des Gehäuseteils 53 konisch geformt sein. Um ein Ausweichen des konischen Gehäuseteils 53 nach oben zu verhindern, sind am Gehäuseteil 53 mehrere randoffene Ausnehmungen 56 vorgesehen, in die an der Innenwand 54 der Seitenwand 19 vorgesehene, vorspringende Rippen 57 eingreifen.

In Figur 3 ist ein Ausführungsbeispiel eines erfindungsgemäßen Siebkorbes 60 dargestellt. Der Siebkorb 60 weist einen Boden 61 auf, an dessen Unterseite eine Kupplungsvorrichtung 62 angeordnet ist, die in eine mit einer Antriebswelle des Motors 6 verbundenen Gegenkupplung (nicht dargestellt) eingreift. An der Oberseite des Bodens 61 ist eine Reibscheibe 63 befestigt. Die Reibscheibe 63 ist vorzugsweise durch unlösbare Nietelemente 64 mit dem Boden 61 verbunden. Von einem Umfangsrand 65 ausgehend erstreckt sich eine erste Siebstufe 66 konisch, d.h. trichterartig aufweitend nach oben. Die erste Siebstufe 66 wird durch eine Anzahl von ersten Siebflächen 67 gebildet, die durch vertikal angeordnete parallel zur Siebflächenebene verlaufende erste Versteifungsstege 68 verbunden sind. Die Versteifungsstege 68 werden vorzugsweise durch Umspritzen der Siebflächen 67 angeformt. An einer oberen umlaufenden Kante 69 der ersten Siebstufe 66 ist ein horizontal verlaufender, sich ringförmig um die Kante 69 erstreckender zweiter Versteifungssteg 70 an die Oberkanten der Siebflächen 67 angeformt. Nach oben hin schließt sich dem horizontalen Versteifungssteg 70 eine zweite Siebstufe 71 an. Analog der ersten Siebstufe 66 wird die zweite Siebstufe 71 durch eine Anzahl von zweiten Siebflächen 72 gebildet. Die zweiten Siebflächen 72 sind wiederum durch vertikal angeordnete parallel zur Siebflächenebene verlaufende zweite Versteifungsstege 73 verbunden. An einer oberen Kante 74 der zweiten Siebstufe 71 ist ein abschließender, versteifender Ringwulst 74 angeformt. Der Ringwulst 74 weist einen rinnenförmig nach unten gebogenen Rand 75 auf.

Die erste Siebstufe 66 bzw. die Siebflächen 67 der ersten Siebstufe 66 sind gegenüber der Horizontalen 76 vorzugsweise um den Winkel v um 52,5 Grad aus der Horizontalen nach oben geneigt verlaufend angeordnet. Dem gegenüber weist die zweite Siebstufe 71 bzw. die zweiten Siebflächen 72 einen größeren Winkel w auf, der vorzugsweise um den Winkel w um 57 Grad aus der Horizontalen nach oben geneigt verlaufend angeordnet ist.

## Patentansprüche

1. Siebkorb (60) für eine Haushalts-Saftzentrifuge, der einen mit einer Reibscheibe (63) ausgestatteten Boden (61) aufweist, an den sich ein mit Durchtritten versehenes, zumindest über einen Teil ihrer Höhe sich konisch erweiterndes Sieb anschließt, das eine erste (66) und eine zweite (71) Siebstufe mit übereinander angeordneten Umfangswänden unterschiedlicher Steigungswinkel aufweist, wobei sowohl die erste (66) als auch die zweite (71) Siebstufe eine sich konisch vom Boden (61) weg erweiternde Umfangswand aufweist und die zwischen dem Boden (61) und der zweiten Siebstufe (71) angeordnete erste Siebstufe (66) einen geringeren Steigungswinkel als die zweite Siebstufe (71) aufweist, **dadurch gekennzeichnet, dass** die erste Siebstufe (66) einen Steigungswinkel zwischen 45° und 54,9° aufweist.

2. Siebkorb nach Anspruch 1, **dadurch gekennzeichnet, dass** die erste Siebstufe (66) einen Steigungswinkel zwischen 50,5° und 53,5°, vorzugsweise von 52,5° aufweist.

3. Siebkorb nach Anspruch 1 oder 2, **dadurch gekennzeichnet, dass** die zweite Siebstufe (71) einen Steigungswinkel zwischen 55° und 65° aufweist.

4. Siebkorb nach Anspruch 3, **dadurch gekennzeichnet, dass** die zweite Siebstufe (71) einen Steigungswinkel zwischen 55,5° und 58,5°, vorzugsweise von 57° aufweist.

5. Siebkorb nach einem der Ansprüche 1 bis 4, **dadurch gekennzeichnet, dass** die zweite Siebstufe (71) lösbar an der ersten Siebstufe (66) befestigt ist.

6. Siebkorb nach einem der Ansprüche 1 bis 4, **dadurch gekennzeichnet, dass** die zweite Siebstufe (71) einteilig mit der ersten Siebstufe (66) verbunden ist.

7. Siebkorb nach Anspruch 5 oder 6, **dadurch gekennzeichnet, dass** jede Siebstufe (66, 71) mindestens eine kunststoffumspritzte, metallische Siebfläche (67, 72) aufweist.

8. Siebkorb nach Anspruch 7, **dadurch gekennzeichnet, dass** die Siebflächen (67, 72) aus perforiertem Edelstahl-Streckmetall hergestellt sind.

9. Siebkorb nach Anspruch 7 oder 8, **dadurch gekennzeichnet, dass** jede Siebstufe (66, 71) eine Anzahl von Siebflächen (67, 72) trägt, die über Versteifungsstege (70, 73) miteinander verbunden sind.

10. Siebkorb nach Anspruch 9, **dadurch gekennzeichnet, dass** die Versteifungsstege (70) der ersten Siebstufe (66) und die Versteifungsstege (73) der zweiten Siebstufe (71) zur Drehachse des Siebkorbes (60) versetzt zueinander angeordnet sind.

11. Haushalts-Saftzentrifuge mit einem Siebkorb (60) nach einem der Ansprüche 1 bis 10.

## Claims

1. Strainer basket (60) for a household juice centrifuge, which comprises a base (61), which is equipped with a rubbing disc (63) and with which is connected a strainer, which is provided with passages and conically widens over at least a part of the height thereof and which has a first strainer stage (66) and a second strainer stage (71) with circumferential walls of different angles of inclination arranged one above the other, wherein not only the first strainer stage (66), but also the second strainer stage (71) have a circumferential wall conically widening in a direction away from the base (61) and the first strainer stage (66) arranged between the base (61) and the second strainer stage (71) has a smaller angle of inclination than the second strainer stage (71), **characterised in that** the first strainer stage (66) has an angle of inclination between 45° and 54.9°.

2. Strainer basket according to claim 1, **characterised in that** the first strainer stage (66) has an angle of inclination between 50.5° and 53.5°, preferably 52.5°.

3. Strainer basket according to claim 1 or 2, **characterised in that** the second strainer stage (71) has an angle of inclination between 55° and 65°.

4. Strainer basket according to claim 3, **characterised in that** the second strainer stage (71) has an angle of inclination between 55.5° and 58.5°, preferably 57°.

5. Strainer basket according to any one of claims 1 to 4, **characterised in that** the second strainer stage (71) is detachably fastened to the first strainer stage (66).

6. Strainer basket according to any one of claims 1 to 4, **characterised in that** second strainer stage (71) is integrally connected with the first strainer stage (66).

7. Strainer basket according to claim 5 or 6, **characterised in that** each strainer stage (66, 71) has at least one metallic strainer area (67, 72) injection-moulded around by plastics material.

8. Strainer basket according to claim 7, **characterised in that** the strainer areas (67, 72) are produced from perforated expanded-metal stainless steel.

9. Strainer basket according to claim 7 or 8, **characterised in that** each strainer stage (66, 71) carries a number of strainer areas (67, 72), which are connected together by way of stiffening webs (70, 73).

10. Strainer basket according to claim 9, **characterised in that** the stiffening webs (70) of the first strainer stage (66) and the stiffening webs (73) of the second strainer stage (71) are arranged offset relative to one another with respect to the rotational axis of the strainer basket (60).

11. Household juice centrifuge with a strainer basket (60) according to any one of claims 1 to 10.

## Revendications

1. Panier de filtrage (60) pour une centrifugeuse à jus domestique, lequel présente un fond (61) équipé d'un disque à râper (63), auquel se raccorde un filtre, muni de passages, s'élargissant de manière conique au moins sur une partie de sa hauteur, ce filtre présentant un premier étage de filtrage (66) et un second étage de filtrage (71) comprenant des parois circonférentielles, disposées les unes au-dessus des autres, de différents angles d'inclinaison, aussi bien le premier étage de filtrage (66) que le second (71) présentant une paroi circonférentielle s'élargissant de manière conique en s'éloignant du fond (61) et le premier étage de filtrage (66) disposé entre le fond (61) et le second étage de filtrage (71) présentant un angle d'inclinaison plus petit que le second étage de filtrage (71), **caractérisé en ce que** le premier étage de filtrage (66) présente un angle d'inclinaison compris entre 45° et 54,9°.

2. Panier de filtrage selon la revendication 1, **caractérisé en ce que** le premier étage de filtrage (66) présente un angle d'inclinaison compris entre 50,5° et 53,5°, de préférence de 52,5°.

3. Panier de filtrage selon la revendication 1 ou 2, **caractérisé en ce que** le second étage de filtrage (71) présente un angle d'inclinaison compris entre 55° et 65°.

4. Panier de filtrage selon la revendication 3, **caractérisé en ce que** le second étage de filtrage (71) présente un angle d'inclinaison compris entre 55,5° et 58,5°, de préférence de 57°.

5. Panier de filtrage selon l'une quelconque des revendications 1 à 4, **caractérisé en ce que** le second étage de filtrage (71) est fixé de manière amovible sur le premier étage de filtrage (66).

6. Panier de filtrage selon l'une quelconque des revendications 1 à 4, **caractérisé en ce que** le second étage de filtrage (71) est raccordé d'une seule pièce au premier étage de filtrage (66).

7. Panier de filtrage selon la revendication 5 ou 6, **caractérisé en ce que** chaque étage de filtrage (66, 71) présente au moins une surface de filtrage (67, 72) métallique enrobée de plastique.

8. Panier de filtrage selon la revendication 7, **caractérisé en ce que** les surfaces de filtrage (67, 72) sont fabriquées à partir de métal étiré en acier inoxydable perforé.

9. Panier de filtrage selon la revendication 7 ou 8, **caractérisé en ce que** chaque étage de filtrage (66, 71) porte un nombre de surfaces de filtrage (67, 72) qui sont raccordées entre elles par l'intermédiaire de nervures de renforcement (70, 73).

10. Panier de filtrage selon la revendication 9, **caractérisé en ce que** les nervures de renforcement (70) du premier étage de filtrage (66) et les nervures de renforcement (73) du second étage de filtrage (71) sont disposées de manière décalée les unes par rapport aux autres et par rapport à l'axe de rotation du panier de filtrage (60).

11. Centrifugeuse à jus domestique comprenant un panier de filtrage (60) selon l'une quelconque des revendications précédentes.
